# EUROPEAN PATENT SPECIFICATION

(11) **EP 2 985 989 B1**
(45) Date of publication and mention of the grant of the patent: **21.10.2020**
(21) Application number: 15178936.9
(22) Date of filing: 29.07.2015
(51) Int. Cl.: H04N 1/00

(54) **METHOD AND DEVICE FOR ACQUIRING MULTIMEDIA DATA STREAM**
VERFAHREN UND VORRICHTUNG ZUR ERFASSUNG EINES MULTIMEDIADATENSTROMS
PROCÉDÉ ET DISPOSITIF D'ACQUISITION DE FLUX DE DONNÉES MULTIMÉDIA

(30) Priority: 15.08.2014 CN 201410403536
(43) Date of publication of application: 17.02.2016
(73) Proprietor: Xiaomi Inc., Beijing 100085 (CN)
(72) Inventor: LI, Feiyun, 100085 Haidian District (CN); GAO, Ziguang, 100085 Haidian District (CN); CHEN, Hao, 100085 Haidian District (CN)
(74) Representative: Robson, Aidan John

(56) References cited:
- CN-A- 102 868 913
- CN-B- 101 848 235
- US-A1- 2004 092 231
- US-A1- 2013 124 740

## Description

### TECHNICAL FIELD

The present disclosure generally relates to the field of terminal technology, and more particularly, to a method and device for acquiring a multimedia data stream.

### BACKGROUND

With the development of terminal technology and communication technology, camera devices with Wi-Fi (Wireless-Fidelity) have become very popular. A terminal may control such a camera device at another place over network, to preview a multimedia data stream photographed by the camera device.

However, each time the terminal intends to control the camera device to start a preview operation, the terminal needs to establish a Socket connection (Socket) between the terminal and the camera device, after that it may send a command of transferring the multimedia data stream to the camera device through the Socket connection, and then receive and preview the multimedia data stream photographed by the camera device. Eventually, when the terminal receives an operation of pausing preview, the Socket connection between the terminal and the camera device will be disconnected. Those skilled in the art will be aware that a Socket connection is a connection with a device in a network, the device having for example, a local IP address and port number.

US2013124740 A1 discloses a method for automatically establishing a wireless connection between a target screen device and a mobile wireless device to enable streaming of multimedia data. The method is comprising the steps of: (i) creating a dynamic image code which includes specific data which enables establishing wireless connection of the mobile device with the target screen device; (ii) displaying said image code on the target screen device, until a connection with a mobile wireless device is established; (iii) capturing said dynamic image code by the mobile wireless device; decoding the dynamic code for retrieving the specific data that are associated with the target screen device; and (iv) establishing a wireless connection between the target screen device and the mobile wireless device for enabling multimedia data streaming by the mobile wireless device based on the retrieved specific data.

CN102868913 A specifies a terminal configured to set up a socket connection to a server.

It is found out that at least the following problems exist in the related art.

A Socket connection between the terminal and the camera device has to be established each time an operation of preview is started by the terminal, and only after that operations of transferring and displaying multimedia data stream may be performed. This method is time consuming, and fails to achieve a real time preview of the contents photographed by the camera device, so the efficiency of controlling the camera device is rather low.

### SUMMARY

The present invention is defined by the appended independent claims 1, 5, and 9. Further embodiments of the invention are defined by the dependent claims.

### BRIEF DESCRIPTION OF THE DRAWINGS

The accompanying drawings, which are hereby incorporated in and constitute a part of this specification, illustrate embodiments of the invention, and explain the principles of the invention together with the description.
Fig. 1 is a flowchart of a method for acquiring a multimedia data stream according to an exemplary embodiment of the present disclosure;
Fig. 2 is a flowchart of a method for acquiring a multimedia data stream according to an exemplary embodiment of the present disclosure;
Fig. 3 is a flowchart of an implementation of starting the target camera device in the method for acquiring a multimedia data stream according to an exemplary embodiment of the present disclosure;
Fig. 4 is a flowchart of another implementation of starting the target camera device in the method for acquiring a multimedia data stream according to an exemplary embodiment of the present disclosure;
Fig. 5 is a flowchart of a method for acquiring a multimedia data stream according to an exemplary embodiment of the present disclosure;
Fig. 6 is an interface diagram showing a list of smart devices according to an exemplary embodiment of the present disclosure;
Fig. 7 is an interface diagram showing a preview interface according to an exemplary embodiment of the present disclosure;
Fig. 8 is a block diagram of a device for acquiring a multimedia data stream according to an exemplary embodiment of the present disclosure; and
Fig. 9 is a block diagram of a device for acquiring a multimedia data stream according to an exemplary embodiment of the present disclosure.

### DESCRIPTION OF THE EMBODIMENTS

The objects, technical solutions and advantages of the disclosure may become more clearly, through a further detailed description given hereinafter to embodiments of the disclosure in conjunction with the accompany drawings.

### A first embodiment

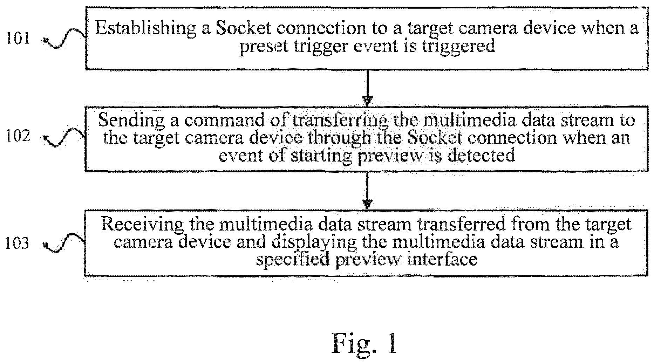

Embodiments of the present disclosure provide a method for acquiring a multimedia data stream, which is applied in a terminal. As illustrated in Fig 1, the method includes the following steps.

In step 101, it is established a Socket connection to a target camera device when a preset trigger event is triggered;
In step 102, it is sent a command of transferring the multimedia data stream to the target camera device through the Socket connection when an event of starting preview is detected;
In step 103, it is received the multimedia data stream transferred from the target camera device and it is displayed the multimedia data stream in a specified preview interface.

In case where the terminal is in a network different with the target camera, in order to establish the Socket connection, the technology of Network Address Translation (NAT) traversal is needed. The NAT technology addresses the problem of establishing a connection between hosts in a private TCP/IP network using a NAT device, in a TCP/IP related network.

According to embodiments of the present disclosure, by establishing a Socket connection to a target camera device when a preset trigger event is triggered; sending a command of transferring a multimedia data stream to the target camera device through the Socket connection when an event of starting preview is detected and receiving the multimedia data stream transferred from the target camera device and displaying it, the contents photographed by the target camera device may be acquired through the pre-established Socket connection when a user performs a preview. Therefore, the preview may be performed in real time, the efficiency of controlling the target camera device may be improved and the delay in the preview operation may be reduced.

### A second embodiment

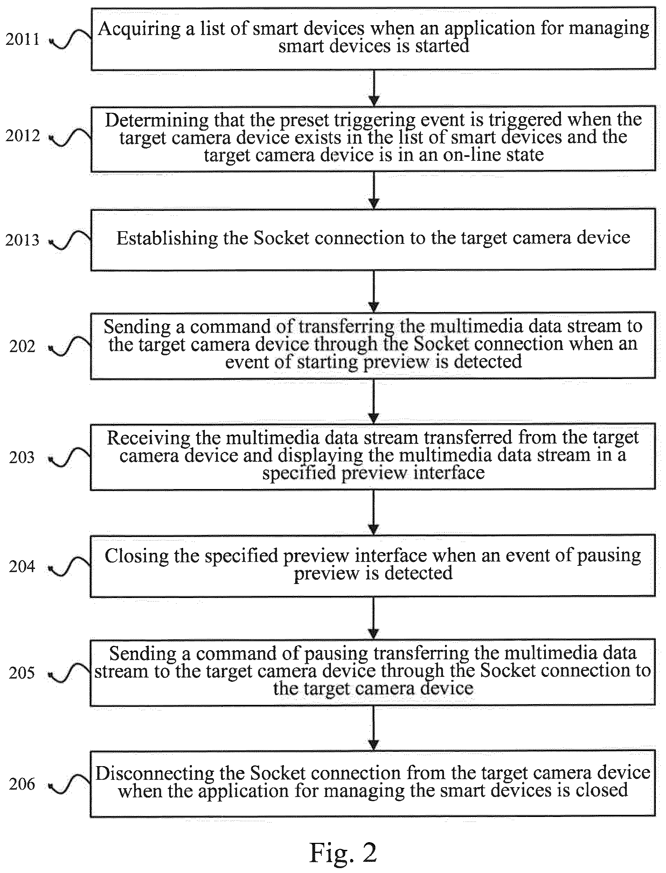

Embodiments of the present disclosure provide a method for acquiring a multimedia data stream, which is applied in a terminal. As illustrated in Fig 2, the method includes the following steps.

In step 201, it is established a Socket connection to a target camera device when a preset trigger event is triggered;
According to embodiments of the present disclosure, an application for managing smart devices is started in the terminal, after that a list of smart devices for management is acquired and displayed. At this time, it is judged whether there is an associated target device in the list of smart devices. If there is a target camera device, it is further judged whether a connection state of the target camera device is on line or not. If it is on line, it is determined that the preset triggering event is triggered.

Wherein, the list of smart devices includes an identifier, online time and a corresponding connection state of an associated smart device in the terminal. Wherein, the connection state includes an on-line sate and an off-line state. In the list of smart devices, an identifier displayed in a first color may indicate that the smart device is on-line and an identifier displayed in a second color may indicate that the smart device is off-line.

An on-line smart device is a device that is powered on and has an access to the network through a network device; and an off-line smart device is a device that is powered on and has no access to the network through a network device, or a device that is powered off. Alternatively, the terminal may send a starting command to the off-line smart device to start it and update the state of the smart device from the off-line state to the on-line state through the network device or server.

Accordingly, step 201 may be implemented by the following steps.

In step 2011, it is acquired a list of smart devices when an application for managing smart devices is started;
In step 2012, if there is a target camera device in the list of smart devices and the target camera device is in an on-line state, it is determined that the preset triggering event is triggered.

In step 2013, the Socket connection to the target camera device is established.

Wherein, the process of step 2013 is to establish a background thread and perform the operation of establishing the Socket connection to the target camera device through the background thread. In this process, a port number for the audio stream in the multimedia data stream, a port number for the video stream, and a port number for the controlling command transferred between the terminal and the target camera device are negotiated. After that, corresponding contents will be transferred respectively according to each of the port numbers upon triggering of a command of transferring the multimedia data stream.

The implementation of the embodiments of the present disclosure may include two situations.

For the first situation, the terminal and the target camera device with Wi-Fi function are in a same network with a network device. In this case, after the target camera device is started, the on-line state of the target camera device will be updated in the network device. After it starts the application for managing smart devices, the terminal acquires the on-line state of each of the smart devices and updates the list of smart devices in the terminal. At this time, the target camera device in the list of smart devices acquired by the terminal is in an on-line state.

For the second situation, the terminal and the target camera device with Wi-Fi function are not in a same network with a network device. In this case, after the target camera device is started, the on-line state of the target camera device is sent to a cloud server through the network device, and the on-line state of the target camera device is updated by the cloud server. After it starts the application for managing smart devices, the terminal acquires the on-line state of each of the smart devices by performing a query with the cloud server and updates the list of smart devices in the terminal. At this time, the target camera device in the list of smart devices acquired by the terminal is in the on-line state. When the terminal and the target camera device are not in a same network, in order to establish the Socket connection, the technology of Network Address Translation (NAT) traversal is needed.

Alternatively, the preset triggering event may include other forms. For example, the preset triggering event is triggered by the terminal is connected in the network. How the preset triggering event is triggered is not restricted by the embodiments of the present disclosure.

In step 202, it is sent a command of transferring the multimedia data stream to the target camera device through the Socket connection when an event of starting preview is detected

When a user selects to enter the preview interface of the target camera device in the list of smart devices, the event of starting preview will be triggered.

In step 203, the multimedia data stream transferred from the target camera device is received and is displayed in a specified preview interface.

For example, the audio stream, video stream and controlling command are transferred through the port negotiated in step 2013.

A preview interface is established through the application for managing smart devices and the multimedia data stream is displayed in the preview interface.

In step 204, the specified preview interface is closed when an event of pausing preview is detected.

The user may click a quit button in the preview interface when he wants to pause preview of the multimedia data stream, so that the event of pausing preview will be triggered, and the established preview interface will be closed.

In step 205, the command of pausing transferring the multimedia data stream is sent to the target camera device through the Socket connection to the target camera device.

Wherein, after the command of pausing transferring the multimedia data stream is sent, the Socket connection to the target camera device will not be disconnected, but will remain connected. In this way, before he closes the application for managing smart devices, the user may transfer and display the multimedia data stream in real time when the event of starting preview is triggered again in the application for managing smart devices, without re-establishing the Socket connection between the terminal and the target, so that the user may view the contents from the target camera device without interruption.

Accordingly, after step 205 is finished, the processes from step 202 to step 205 may be performed repeatedly. And step 206 may be performed when it needs to quit from the application for managing smart devices. Thus, the sequence of the steps is not limited in embodiments of the present disclosure.

In step 206, the Socket connection to the target camera device is disconnected when the application for managing smart devices is closed.

In embodiments of the present disclosure, the Socket connection to the target camera device will not be disconnected until the application for managing smart devices is closed.

According to embodiments of the present disclosure, by establishing a Socket connection to a target camera device when a preset trigger event is triggered; sending a command of transferring a multimedia data stream to the target camera device through the Socket connection when an event of starting preview is detected and receiving the multimedia data stream transferred from the target camera device and displaying it, the contents photographed by the target camera device may be acquired through the pre-established Socket connection when a user performs a preview. Therefore, the preview may be performed in real time, the efficiency of controlling the target camera device may be improved and the delay in the preview operation may be reduced.

Further, the Socket connection to the target camera device is not disconnected until the application for managing smart devices is closed, so that the user may preview the contents photographed by the target camera device in real time through the Socket connection before the application for managing smart devices is closed.

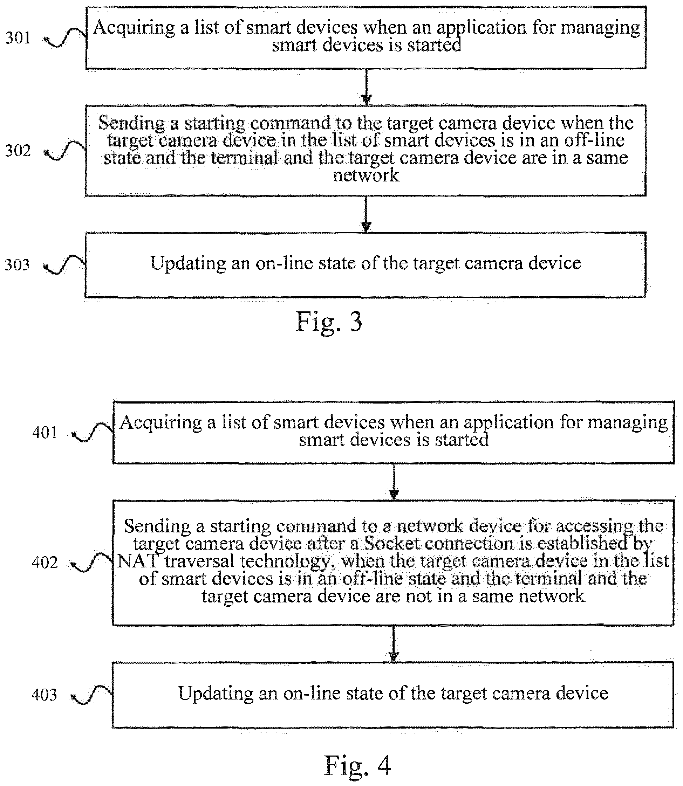

Embodiments of the present disclosure provide an implementation of starting the target camera device in the method for acquiring a multimedia data stream, which is applied in a terminal. As illustrated in Fig 3, the method includes the following steps.

In step 301, a list of smart devices is acquired when an application for managing smart devices is started;

In embodiments of the present disclosure, the target camera device in the acquired list of smart devices is in an off-line state.

In step 302, if the target camera device in the list of smart devices is in an off-line state and the terminal and the target camera device are in a same network, a starting command is sent to the target camera device.

Wherein, the terminal and the target camera device are in a same network, that is, both the terminal and the target camera device are coupled to a same network device. For example, the user and the corresponding terminal are at home, the target camera device is also at home, and the terminal and the target camera are coupled to a same network device which may be a router.

Wherein, the starting command sent to the target camera device from the terminal may be sent directly to the target camera device from the terminal through the network; or the starting command sent by the terminal may be received by the network device, and then forwarded to the target camera device by the network device.

If the starting command sent by the terminal is received by a target camera device which is in a sleeping state, a wakening procedure is started to enable a normal operation state. At this time, the target camera device sends command for updating its state to the network device so that the state of the target camera may be updated from the off-line state to the on-line state by the network device.

In step 303, the on-line state of the target camera device is updated.

Since the target camera device in the list of smart devices acquired in step 301 by the terminal is in an off-line state, the list of smart devices in the terminal needs to be updated at this time to acquire the on-line state of the target camera. Wherein, the updating is performed by the terminal sending a request for updating the list of smart devices to the network device, so as to acquire the state of each smart device stored in the network device.

The process in step 303 may be triggered by the operation that the user updates the list of smart devices manually, or may be triggered automatically at a preset time interval after the starting command is sent out.

According to embodiments of the present disclosure, by sending a starting command to a target camera device which is in an off-line state, to start a target camera device which is in a sleeping state, a Socket connection between the terminal and the target camera device may be established.

Embodiments of the present disclosure provide another implementation of starting the target camera device in the method for acquiring a multimedia data stream, which is applied in a terminal. As illustrated in Fig 4, the method includes the following steps.

In step 401, the list of smart devices is acquired when an application for managing smart devices is started;
In embodiments of the present disclosure, the target camera device in the acquired list of smart devices is in an off-line state.

In step 402, it is sent a starting command to a network device for accessing the target camera device after a Socket connection is established by NAT traversal technology, when the target camera device in the list of smart devices is in an off-line state and the terminal and the target camera device are not in a same network.

Wherein, the terminal and the target camera device are not in a same network, that is, the terminal and the target camera device are respectively coupled to different network devices and are connected in a respective network by a corresponding network device. For example, the user and the corresponding terminal are in a company, but the target camera device is at home, the terminal are coupled to the network device in the company and the target camera are coupled to the network device at home, and the network device may be a router.

If the Socket connection is established by the NAT traversal technology, the starting command sent to the target camera device from the terminal needs to be sent to the network device that the target camera device is coupled to and then be forwarded to the target camera device by the network device.

If the starting command sent by the terminal is received by a target camera device which is in a sleeping state, a wakening procedure is started to enable a normal operation state. At this time, the target camera device sends command for updating its state to a cloud server so that the state of the target camera may be updated from the off-line state to the on-line state by the cloud server.

In step 403, the on-line state of the target camera device is updated.

Since the target camera device in the list of smart devices acquired in step 401 by the terminal is in an off-line state, the list of smart devices in the terminal needs to be updated at this time to acquire the on-line state of the target camera. Wherein, the updating is performed by the terminal sending a request for updating the list of smart devices to the cloud server, so as to acquire the state of each smart device stored in the cloud server.

The process in step 403 may be triggered by the operation that the user updates the list of smart devices manually, or may be triggered automatically at a preset time interval after the starting command is sent out.

According to embodiments of the present disclosure, by sending a starting command to a target camera device which is in an off-line state, to start a target camera device which is in a sleeping state, a Socket connection between the terminal and the target camera device may be established.

### A third embodiment

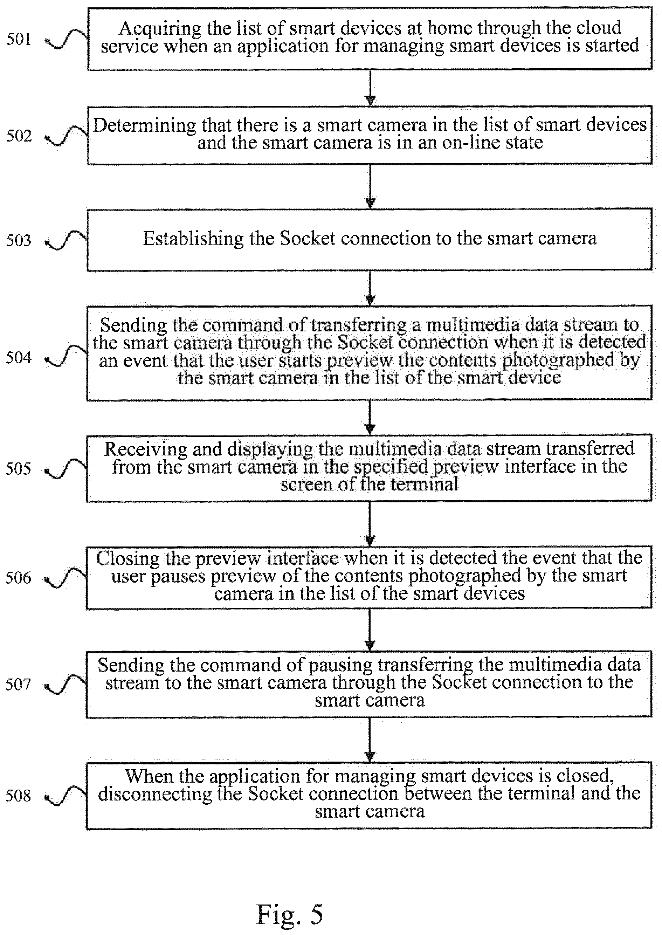

Hereinafter, the method for acquiring a multimedia data stream provided by embodiments of the present disclosure will be illustrated with an example in which the user is at a company and the camera is at home. As illustrated in Fig 5, the method includes the following steps.

In step 501, the list of smart devices at home is acquired through the cloud service when an application for managing smart devices is started;
Wherein, in embodiments of the present disclosure, the smart devices at home update their own connection states to the cloud service through the network device at home, and the cloud service is configured to record the connection state of each smart device in the list of smart devices associated with the user's terminal.

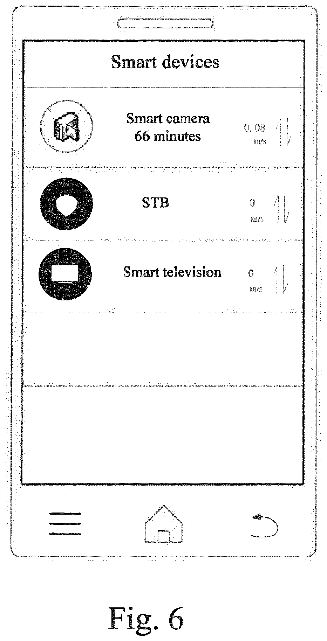

Figure 6 shows the interface diagram of the list of smart devices. As illustrated in Fig. 6, currently there are three smart devices associated with the user terminal, respectively a smart camera, a STB (Set Top Box) and a smart television. As illustrated in Fig 6, the identifier of the smart camera in the list of smart devices is in a light color, which indicates that the smart camera is in an on-line state, and the identifiers of the STB and smart television in the list of smart devices are in deep color, which indicates that the STB and smart television are in the off-line state.

In step 502, it is determined that there is a smart camera in the list of smart devices and the smart camera is in an on-line state.

In step 503, the Socket connection to the smart camera is established. The Socket connection needs to be established by the NAT traversal technology when the terminal and the smart devices are not in a same network.

In step 504, the command of transferring a multimedia data stream is sent to the smart camera through the Socket connection when it is detected an event that the user starts preview the contents photographed by the smart camera in the list of the smart device.

In step 505, the multimedia data stream transferred from the smart camera is received and is displayed in the specified preview interface in the screen of the terminal.

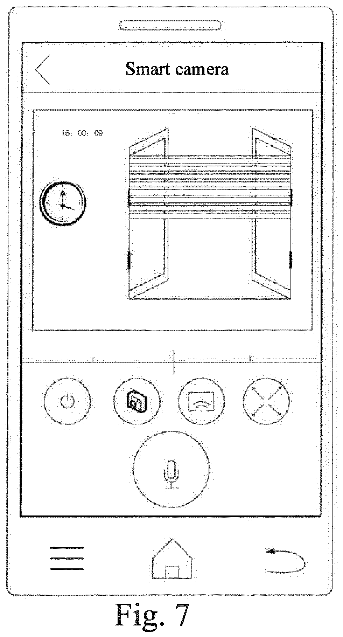

Figure 7 shows the interface diagram of the preview interface. As illustrated in Fig 7, the preview interface includes a display area for displaying the multimedia data stream transferred from the smart camera, and various control buttons for controlling the smart camera, such as a backward button, a switch button, a camera button and a full screen button, etc.

In step 506, when it is detected the event that the user pauses preview of the contents photographed by the smart camera in the list of the smart device, the preview interface is closed.

Wherein, when the user clicks the backward button in the preview interface of the terminal, the event of pausing preview the contents photographed by the smart camera is triggered, then the preview interface is closed and an interface for displaying the list of smart devices returns.

In step 507, the command of pausing transferring the multimedia data stream is sent to the smart camera through the Socket connection to the smart camera.

In order to preview the contents photographed by the smart camera through the pre-established a Socket connection between the terminal and the smart camera, the user may perform the steps 504 to 507 repeatedly before the application for managing smart devices is closed.

In step 508, when the application for managing smart devices is closed, the Socket connection between the terminal and the smart camera is disconnected.

According to embodiments of the present disclosure, by establishing a Socket connection to a target camera device when it is determined that the smart camera is in the list of smart devices and the smart camera is in an on-line state, issuing a command of transferring the multimedia data stream through the Socket connection when the event that the user starts preview the contents photographed by the smart camera in the list of the smart device is detected, receiving and displaying the multimedia data stream transferred from the smart camera, and when the event that the user pauses preview the contents photographed by the smart camera in the list of the smart device is detected, pausing receiving of the multimedia data stream transferred from the smart camera and maintaining the Socket connection connected, the contents photographed by the target camera device may be acquired through the pre-established Socket connection when a user performs a preview. Therefore, the preview may be performed in real time, the efficiency of controlling the target camera device may be improved and the delay in the preview operation may be reduced.

Further, the Socket connection to the target camera device is not disconnected until the application for managing smart devices is closed in a preset triggering event, so that the user may preview the contents photographed by the smart camera in real time through the Socket connection when the application for managing smart devices is not closed.

### A fourth embodiment

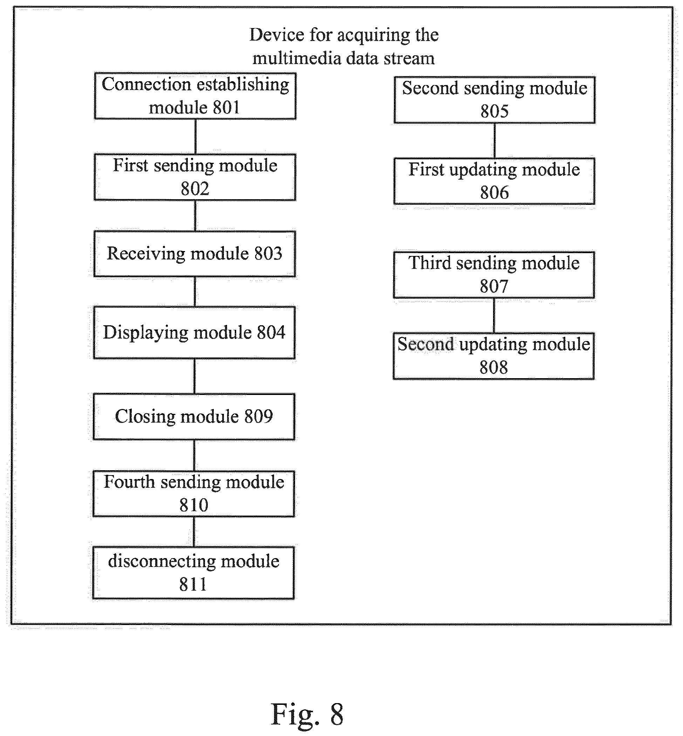

A device for acquiring the multimedia data stream is provided by embodiments of the present disclosure, as illustrated in Fig 8, the device includes:
a connection establishing module 801, configured to establish a Socket connection to a target camera device when a preset triggering event is triggered;
a first sending module 802, configured to send a command of transferring the multimedia data stream to the target camera device through the Socket connection when an event of starting preview is detected;
a receiving module 803, configured to receive the multimedia data stream transferred from the target camera device; and
a displaying module 804, configured to display the multimedia data stream in a specified preview interface.

Wherein, the connection establishing module 801 includes:
an acquiring unit, configured to acquire a list of smart devices when an application for managing smart devices is started;
a determining unit, configured to determine that the preset triggering event is triggered when the target camera device exists in the list of smart devices and the target camera device is in an on-line state; and
a connection establishing unit, configured to establish the Socket connection to the target camera device.

Wherein, the device further includes:
a second sending module 805, configured to send a starting command to the target camera device when the target camera device in the list of smart devices is in an off-line state and the device and the target camera device are in a same network; and
a first updating module 806, configured to update an on-line state of the target camera device.

Wherein, the device further includes:
a third sending module 807, configured to send a starting command to a network device for accessing the target camera device after a Socket connection is established by NAT traversal technology, when the target camera device in the list of smart devices is in an off-line state and the device and the target camera device are not in a same network; and
a second updating module 808, configured to update an on-line state of the target camera device.

Wherein, the device further includes:
a closing module 809, configured to close the specified preview interface when an event of pausing preview is detected; and
a fourth sending module 810, configured to send a command of pausing transferring the multimedia data stream to the target camera device through the Socket connection to the target camera device.

Wherein, the device further includes:
a disconnecting module 811, configured to disconnect the Socket connection from the target camera device when the application for managing smart devices is closed.

According to embodiments of the present disclosure, by establishing a Socket connection to a target camera device when a preset trigger event is triggered; sending a command of transferring a multimedia data stream to the target camera device through the Socket connection when an event of starting preview is detected and receiving the multimedia data stream transferred from the target camera device and displaying it, the contents photographed by the target camera device may be acquired through the pre-established Socket connection when a user performs a preview. Therefore, the preview may be performed in real time, the efficiency of controlling the target camera device may be improved and the delay in the preview operation may be reduced.

### A fifth embodiment

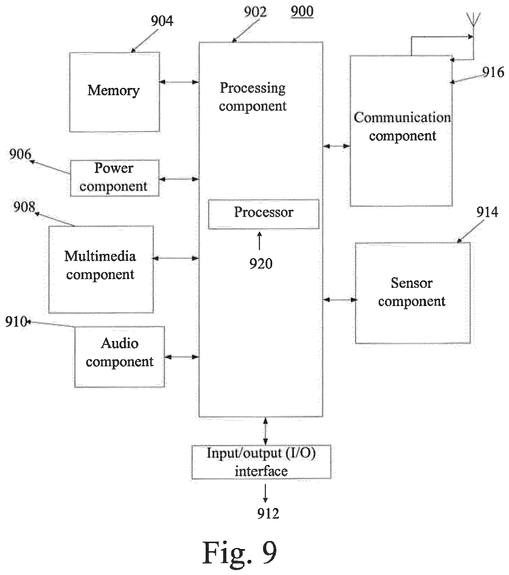

Fig. 9 is a block diagram of a terminal device 900 for acquiring a multimedia data stream according to an exemplary embodiment. For example, the device 900 may be a mobile phone, a computer, a digital broadcast terminal, a messaging device, a gaming console, a tablet, a medical device, exercise equipment, a personal digital assistant, and the like.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 920 in the device 900, for performing the above-described methods. For example, the non-transitory computer-readable storage medium may be a ROM, a RAM, a CD-ROM, a magnetic tape, a floppy disc, an optical data storage device, and the like.

According to embodiments of the present disclosure, by establishing a Socket connection to a target camera device when a preset trigger event is triggered; sending a command of transferring a multimedia data stream to the target camera device through the Socket connection when an event of starting preview is detected and receiving the multimedia data stream transferred from the target camera device and displaying it, the contents photographed by the target camera device may be acquired through the pre-established Socket connection when a user performs a preview. Therefore, the preview may be performed in real time, the efficiency of controlling the target camera device may be improved and the delay in the preview operation may be reduced.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes may be made without departing from the scope thereof. It is intended that the scope of the invention only be limited by the appended claims.

## Claims

1. A method for controlling a terminal (900) to acquire a multimedia data stream from a target camera device, wherein the terminal (900) comprises a processing component (902) connected to a communication component (916) and a multimedia component (908) including a touch screen,
the method comprising the steps of: acquiring (2011) a list of smart devices when an application for managing smart devices is started;
determining (2012) triggering of a preset triggering event if the target camera device exists in the list of smart devices and the target camera device is indicated to be in an on-line state;
establishing (2013) a socket connection to the target camera device, using the communication component, when the preset trigger event is triggered; sending (202) a command to the target camera device to transfer the multimedia data stream through the socket connection if an event of starting preview is detected, by the multimedia component (908), in response to user selection;
receiving (203) the multimedia data stream transferred from the target camera device at the terminal and displaying the multimedia data stream in a specified preview interface;
keeping the socket connection before an application for managing smart devices is closed; and
disconnecting (206) the socket connection from the target camera device when the application for managing smart devices is closed.

2. The method according to claim 1, wherein, after the acquiring a list of smart devices, the method further comprises:
sending (302) a starting command to the target camera device when the target camera device in the list of smart devices is in an off-line state and the terminal and the target camera device are in a network; and
updating (303) an on-line state of the target camera device in a list of smart devices at the terminal.

3. The method according to claim 1, wherein, after the acquiring a list of smart devices, the method further comprises:
sending (402) a starting command to a network device for accessing the target camera device after a socket connection is established by NAT traversal technology, if the target camera device in the list of smart devices is in an off-line state and the terminal and the target camera device are in a network; and
updating (403) an on-line state of the target camera device.

4. The method according to claim 1, wherein, after the receiving the multimedia data stream transferred from the target camera device and displaying the multimedia data stream in a specified preview interface, the method further comprises:
closing the specified preview interface if an event of pausing preview is detected in response to user selection at the terminal; and
sending a command of pausing transferring the multimedia data stream to the target camera device through the Socket connection to the target camera device.

5. A device (900) configured to acquire a multimedia data stream from a target camera device, the device comprises:
a connection establishing module (801), configured to establish a socket connection to a target camera device if a preset triggering event is triggered on the target camera device and keep the socket connection before an application for managing smart devices is closed;
a first sending module (802), configured to send a command to the target camera device to transfer the multimedia data stream through the socket connection when an event of starting preview is detected in response to user selection detected by a touch screen comprised by the device;
a receiving module (803), configured to receive the multimedia data stream transferred from the target camera device; and
a displaying module (804), configured to display the multimedia data stream in a specified preview interface;
a disconnecting module (811), configured to disconnect the socket connection from the target camera device when the application for managing smart devices is closed.
wherein, the connection establishing module comprises:
an acquiring unit, configured to acquire a list of smart devices if an application for managing smart devices is started;
a determining unit, configured to determine that the preset triggering event is triggered if the target camera device exists in the list of smart devices and the target camera device is indicated to be in an on-line state; and
a connection establishing unit, configured to establish the socket connection to the target camera device.

6. The device according to claim 5, wherein, the device further comprises:
a second sending module (805), configured to send a starting command to the target camera device when the target camera device in the list of smart devices is in an off-line state and the device and the target camera device are in a network; and
a first updating module (806), configured to update an on-line state of the target camera device.

7. The device according to claim 6, wherein, the device further comprises:
a third sending module (807), configured to send a starting command to a network device for accessing the target camera device after a Socket connection is established by NAT traversal technology, if the target camera device in the list of smart devices is in an off-line state and the device and the target camera device are in a network; and
a second updating module (808), configured to update an on-line state of the target camera device.

8. The device according to claim 6, wherein, the device further comprises:
a closing module (809), configured to close the specified preview interface when an event of pausing preview is detected in response to user selection at the terminal; and
a fourth sending module (810), configured to send a command of pausing transferring the multimedia data stream to the target camera device through the Socket connection to the target camera device.

9. A computer program, which when executed on a processor of a device according to any one of claims 5 to 8. performs the method according to any one of claims 1 to 4.

## Patentansprüche

1. Verfahren zum Steuern eines Endgeräts (900) zum Erfassen eines Multimedia-Datenstroms von einer Zielkameravorrichtung, wobei das Endgerät (900) eine Verarbeitungskomponente (902) aufweist, die mit einer Kommunikationskomponente (916) und einer Multimedia-Komponente (908) mit einem Touchscreen verbunden ist;
wobei das Verfahren die folgenden Schritte aufweist:
Erfassen (2011) einer Liste von intelligenten Vorrichtungen, wenn eine Anwendung zur Verwaltung von intelligenten Vorrichtungen gestartet wird;
Bestimmen (2013) des Auslösens eines voreingestellten Auslöseereignisses, falls die Zielkameravorrichtung in der Liste von intelligenten Vorrichtungen vorhanden ist und die Zielkameravorrichtung als in einem Online-Zustand befindlich angegeben wird;
Herstellen (2013) einer Socket-Verbindung mit der Zielkameravorrichtung unter Verwendung der Kommunikationskomponente, wenn das voreingestellte Auslöseereignis ausgelöst wird;
Senden (202) eines Befehls an die Zielkameravorrichtung zum Übertragen des Multimedia-Datenstroms durch die Socket-Verbindung, falls ein Vorschaustartereignis als Reaktion auf eine Benutzerauswahl erkannt wird, durch die Multimedia-Komponente (908);
Empfangen (203) des von der Zielkameravorrichtung am Endgerät übertragenen Multimedia-Datenstroms und Anzeigen des Multimedia-Datenstroms in einer vorgegebenen Vorschauschnittstelle;
Erhalten der Socket-Verbindung, bevor eine Anwendung zur Verwaltung von intelligenten Vorrichtungen geschlossen wird; und
Trennen (206) der Socket-Verbindung von der Zielkameravorrichtung, wenn die Anwendung zur Verwaltung von intelligenten Vorrichtungen geschlossen wird.

2. Verfahren nach Anspruch 1, wobei das Verfahren nach dem Erfassen einer Liste von intelligenten Vorrichtungen ferner Folgendes aufweist:
Senden (302) eines Startbefehls an die Zielkameravorrichtung, wenn die Zielkameravorrichtung in der Liste von intelligenten Vorrichtungen in einem Offline-Zustand ist und das Endgerät und die Zielkameravorrichtung in einem Netzwerk sind; und
Aktualisieren (303) eines Online-Zustands der Zielkameravorrichtung in einer Liste von intelligenten Vorrichtungen am Endgerät.

3. Verfahren nach Anspruch 1, wobei das Verfahren nach dem Erfassen einer Liste von intelligenten Vorrichtungen ferner Folgendes aufweist:
Senden (402) eines Startbefehls an eine Netzwerkvorrichtung zum Zugreifen auf die Zielkameravorrichtung, nachdem eine Socket-Verbindung durch NAT-Durchdringungstechnologie hergestellt worden ist, falls die Zielkameravorrichtung in der Liste von intelligenten Vorrichtungen in einem Offline-Zustand ist und das Endgerät und die Zielkameravorrichtung in einem Netzwerk sind; und
Aktualisieren (403) eines Online-Zustands der Zielkameravorrichtung.

4. Verfahren nach Anspruch 1, wobei das Verfahren nach dem Empfangen des von der Zielkameravorrichtung übertragenen Multimedia-Datenstroms und dem Anzeigen des Multimedia-Datenstroms in einer vorgegebenen Vorschauschnittstelle ferner Folgendes aufweist:
Schließen der vorgegebenen Vorschauschnittstelle, falls ein Vorschaupausierungsereignis als Reaktion auf eine Benutzerauswahl am Endgerät erkannt wird; und
Senden eines Befehls zum Pausieren der Übertragung des Multimedia-Datenstroms zur Zielkameravorrichtung durch die Socket-Verbindung an die Zielkameravorrichtung.

5. Vorrichtung (900), die zum Erfassen eines Multimedia-Datenstroms von einer Zielkameravorrichtung konfiguriert ist, wobei die Vorrichtung Folgendes aufweist:
ein Verbindungsherstellungsmodul (801), das konfiguriert ist zum Herstellen einer Socket-Verbindung mit einer Zielkameravorrichtung, falls an der Zielkameravorrichtung ein voreingestelltes Auslöseereignis ausgelöst wird, und zum Erhalten der Socket-Verbindung, bevor eine Anwendung zur Verwaltung von intelligenten Vorrichtungen geschlossen wird;
ein erstes Sendemodul (802), das konfiguriert ist zum Senden eines Befehls an die Zielkameravorrichtung zum Übertragen des Multimedia-Datenstroms durch die Socket-Verbindung, wenn ein Vorschaustartereignis als Reaktion auf eine Benutzerauswahl erkannt wird, erkannt durch einen Touchscreen, den die Vorrichtung aufweist;
ein Empfangsmodul (803), das konfiguriert ist zum Empfangen des von der Zielkameravorrichtung übertragenen Multimedia-Datenstroms; und
ein Anzeigemodul (804), das konfiguriert ist zum Anzeigen des Multimedia-Datenstroms in einer vorgegebenen Vorschauschnittstelle;
ein Trennmodul (811), das konfiguriert ist zum Trennen der Socket-Verbindung von der Zielkameravorrichtung, wenn die Anwendung zur Verwaltung von intelligenten Vorrichtungen geschlossen wird,
wobei das Verbindungsherstellungsmodul Folgendes aufweist:
eine Erfassungseinheit, die konfiguriert ist zum Erfassen einer Liste von intelligenten Vorrichtungen, falls eine Anwendung zur Verwaltung von intelligenten Vorrichtungen gestartet wird;
eine Bestimmungseinheit, die konfiguriert ist zum Bestimmen, dass das voreingestellte Auslöseereignis ausgelöst wird, falls die Zielkameravorrichtung in der Liste von intelligenten Vorrichtungen vorhanden ist und die Zielkameravorrichtung als in einem Online-Zustand befindlich angegeben wird; und
eine Verbindungsherstellungseinheit, die konfiguriert ist zum Herstellen der Socket-Verbindung mit der Zielkameravorrichtung.

6. Vorrichtung nach Anspruch 5, wobei die Vorrichtung ferner Folgendes aufweist:
ein zweites Sendemodul (805), das konfiguriert ist zum Senden eines Startbefehls an die Zielkameravorrichtung, wenn die Zielkameravorrichtung in der Liste von intelligenten Vorrichtungen in einem Offline-Zustand ist und die Vorrichtung und die Zielkameravorrichtung in einem Netzwerk sind; und
ein erstes Aktualisierungsmodul (806), das konfiguriert ist zum Aktualisieren eines Online-Zustands der Zielkameravorrichtung.

7. Vorrichtung nach Anspruch 6, wobei die Vorrichtung ferner Folgendes aufweist:
ein drittes Sendemodul (807), das konfiguriert ist zum Senden eines Startbefehls an eine Netzwerkvorrichtung zum Zugreifen auf die Zielkameravorrichtung, nachdem eine Socket-Verbindung durch NAT-Durchdringungstechnologie hergestellt worden ist, falls die Zielkameravorrichtung in der Liste von intelligenten Vorrichtungen in einem Offline-Zustand ist und die Vorrichtung und die Zielkameravorrichtung in einem Netzwerk sind; und
ein zweites Aktualisierungsmodul (808), das konfiguriert ist zum Aktualisieren eines Online-Zustands der Zielkameravorrichtung.

8. Vorrichtung nach Anspruch 6, wobei die Vorrichtung ferner Folgendes aufweist:
ein Schließmodul (809), das konfiguriert ist zum Schließen der vorgegebenen Vorschauschnittstelle, wenn ein Vorschaupausierungsereignis als Reaktion auf eine Benutzerauswahl am Endgerät erkannt wird; und
ein viertes Sendemodul (810), das konfiguriert ist zum Senden eines Befehls zum Pausieren der Übertragung des Multimedia-Datenstroms zur Zielkameravorrichtung durch die Socket-Verbindung an die Zielkameravorrichtung.

9. Computerprogramm, das bei Ausführung in einem Prozessor einer Vorrichtung nach einem der Ansprüche 5 bis 8 das Verfahren nach einem der Ansprüche 1 bis 4 durchführt.

## Revendications

1. Procédé destiné à : commander un terminal (900) pour acquérir un flux de données multimédia d'un dispositif de caméra cible, où le terminal (900) comprend un composant de traitement (902) connecté à un composant de communication (916) et un composant multimédia (908) un écran tactile compris,
le procédé comprenant les étapes consistant à :
acquérir (2011) une liste de dispositifs intelligents lorsqu'une application de gestion de dispositifs intelligents est mise en route ;
déterminer (2012) le déclenchement d'un événement de déclenchement préréglé si le dispositif de caméra cible existe dans la liste de dispositifs intelligents et que le dispositif de caméra cible est indiqué être dans un état en ligne ;
établir (2013) une connexion logicielle au dispositif de caméra cible, en utilisant le composant de communication, lorsque l'événement de déclenchement préréglé est déclenché ;
envoyer (202) une commande au dispositif de caméra cible de transférer le flux de données multimédia par la connexion logicielle si un événement de mise en route de prévisualisation est détecté, par le composant multimédia (908), en réponse à une sélection utilisateur ;
recevoir (203) le flux de données multimédia transféré du dispositif de caméra cible au terminal et afficher le flux de données multimédia dans une interface de prévisualisation spécifiée ;
garder la connexion logicielle avant qu'une application de gestion de dispositifs intelligents ne soit fermée ; et
déconnecter (206) la connexion logicielle du dispositif de caméra cible lorsque l'application de gestion de dispositifs intelligents est fermée.

2. Procédé selon la revendication 1, dans lequel, après avoir acquis une liste de dispositifs intelligents, le procédé comprend en outre :
envoyer (302) une commande de mise en route au dispositif de caméra cible lorsque le dispositif de caméra cible dans la liste de dispositifs intelligents est dans un état hors ligne et que le terminal et le dispositif de caméra cible sont dans un réseau ; et
actualiser (303) un état en ligne du dispositif de caméra cible dans une liste de dispositifs intelligents au terminal.

3. Procédé selon la revendication 1, dans lequel, après avoir acquis une liste de dispositifs intelligents, le procédé comprend en outre :
envoyer (402) une commande de mise en route à un dispositif réseau pour accéder au dispositif de caméra cible après qu'une connexion logicielle a été établie par la technologie NAT Traversai, si le dispositif de caméra cible dans la liste de dispositifs intelligents est dans un état hors ligne et que le terminal et le dispositif de caméra cible sont dans un réseau ; et
actualiser (403) un état en ligne du dispositif de caméra cible.

4. Procédé selon la revendication 1, dans lequel, après avoir reçu le flux de données multimédia transféré du dispositif de caméra cible et affiché le flux de données multimédia dans une interface de prévisualisation spécifiée, le procédé comprend en outre :
fermer l'interface de prévisualisation spécifiée si un événement de suspension de la prévisualisation est détecté en réponse à une sélection utilisateur au terminal ; et
envoyer une commande de suspension de transfert de flux de données multimédia au dispositif de caméra cible par la connexion logicielle au dispositif de caméra cible.

5. Dispositif (900) configuré pour acquérir un flux de données multimédia d'un dispositif de caméra cible, le dispositif comprend :
un module d'établissement de connexion (801), configuré pour établir une connexion logicielle à un dispositif de caméra cible si un événement de déclenchement préréglé est déclenché sur le dispositif de caméra cible et garder la connexion logicielle avant qu'une application de gestion de dispositifs intelligents ne soit fermée ;
un premier module d'envoi (802), configuré pour envoyer une commande au dispositif de caméra cible de transférer le flux de données multimédia par la connexion logicielle lorsqu'un événement de mise en route de visualisation est détecté en réponse à une sélection utilisateur détectée par un écran tactile compris dans le dispositif ;
un module de réception (803), configuré pour recevoir le flux de données multimédia transféré du dispositif de caméra cible ; et
un module d'affichage (804), configuré pour afficher le flux de données multimédia dans une interface de prévisualisation spécifiée ;
un module de déconnexion (811), configuré pour déconnecter la connexion logicielle du dispositif de caméra cible lorsqu'une application de gestion de dispositifs intelligents est fermée,
dans lequel, le module d'établissement de connexion comprend :
une unité d'acquisition, configurée pour acquérir une liste de dispositifs intelligents si une application de gestion de dispositifs intelligents est mise en route ;
une unité de détermination, configurée pour déterminer que l'événement de déclenchement préréglé est déclenché si le dispositif de caméra cible existe dans la liste de dispositifs intelligents et que le dispositif de caméra cible est indiqué être dans un état en ligne ; et
une unité d'établissement de connexion, configurée pour établir la connexion logicielle au dispositif de caméra cible.

6. Dispositif selon la revendication 5, où, le dispositif comprend en outre :
un deuxième module d'envoi (805), configuré pour envoyer une commande de mise en route au dispositif de caméra cible lorsque le dispositif de caméra cible dans la liste de dispositifs intelligents est dans un état hors ligne et que le dispositif et le dispositif de caméra cible sont dans un réseau ; et
un premier module d'actualisation (806), configuré pour actualiser un état en ligne du dispositif de caméra cible.

7. Dispositif selon la revendication 6, où, le dispositif comprend en outre :
un troisième module d'envoi (807), configuré pour envoyer une commande de mise en route à un dispositif réseau pour accéder au dispositif de caméra cible après que la connexion logicielle a été établie par la technologie NAT Traversai, si le dispositif de caméra cible dans la liste de dispositifs intelligents est dans un état hors ligne et que le dispositif et le dispositif de caméra cible sont dans un réseau ; et
un deuxième module d'actualisation (808), configuré pour actualiser un état en ligne du dispositif de caméra cible.

8. Dispositif selon la revendication 6, où, le dispositif comprend en outre :
un module de fermeture (809), configuré pour fermer l'interface de prévisualisation spécifiée lorsqu'un événement de suspension de prévisualisation est détecté en réponse à une sélection utilisateur au terminal ; et
un quatrième module d'envoi (810), configuré pour envoyer une commande de suspension de transfert de flux de données multimédia au dispositif de caméra cible par la connexion logicielle au dispositif de caméra cible.

9. Programme informatique, qui, lorsque exécuté sur un processeur d'un dispositif selon l'une quelconque des revendications 5 à 8, met en œuvre le procédé selon l'une quelconque des revendications 1 à 4.
